# EUROPEAN PATENT SPECIFICATION

(11) **EP 0 487 817 B1**
(45) Date of publication and mention of the grant of the patent: **22.01.1997**
(21) Application number: 91109020.7
(22) Date of filing: 03.06.1991
(51) Int. Cl.: B29C 45/76

(54) **A press for injection molding plastics materials**
Presse zum Spritzgiessen von Kunststoffen
Presse pour mouler, par injection, les matières plastiques

(30) Priority: 27.11.1990 IT 2220690
(43) Date of publication of application: 03.06.1992
(73) Proprietor: OIMA S.p.A., 31040 Signoressa di Trevignano (TV) (IT)
(72) Inventor: Soncini, Gino, I-31044 Montebelluna (Treviso) (IT)
(74) Representative: Cantaluppi, Stefano

(56) References cited:
- GB-A- 2 062 296
- US-A- 4 904 913
- PATENT ABSTRACTS OF JAPAN vol. 11, no. 234 (M-611)(2681) 30 July 1987 & JP-A-62 044 416 (TOYODA AUTOM LOOM WORKS LTD) 26 February 1987
- PATENT ABSTRACTS OF JAPAN vol. 13, no. 489 (M-888)(3837) 7 November 1989 & JP-A-1 196 322 (JAPAN STEEL WORKS LTD) 8 August 1989
- PATENT ABSTRACTS OF JAPAN vol. 12, no. 432 (M-763)(3279) 15 November 1988 & JP-A-63 166 513 (NISSEI PLASTICS IND CO) 9 July 1988
- PATENT ABSTRACTS OF JAPAN vol. 12, no. 52 (M-668)(2899) 17 February 1988 & JP-A-62 199 421 (JAPAN STEEL WORKS LTD) 3 September 1987
- KAUTSCHUK UND GUMMI. vol. 39, no. 8, August 1986, HEIDELBERG DE pages 723 - 728; A. LAMPL: 'Moderne Steuerungskonzepte beim Spritzgiessen von Gummiformteilen'

## Description

This invention relates to a press for injection molding plastics materials, comprising machine operational members to be operated by an electric control apparatus to carry out the steps of the molding cycle in conformity with respective adjustable parameters.

As is known, in such generally satisfactory and widely used machines, the molding parameters related to its various machine operational members are adjustable, and their values are selected such that the moldings can fill their requirements for quality.

In US-A-4,904,913 there is disclosed a system for controlling the rotational speed of a motor in an injection moulding machine designed for reducing the amount of electrical power required by such machine during its cycle period. In its essential lines the system includes a logic circuit which produces a logic control signal comprising a time stream of voltage level steps which correspond in time to the operation steps of the plastic forming machine. The voltage level of each step is representative of the power needed by the motor to provide approximately the least amount of power necessary to power the hydraulic pump or pumps of the machine for each of the operation steps. The motor is fed with alternated current whose frequency is varied by means of an inverter. The inverter is controlled by the logic circuit such that the frequency is directly proportional, during the time period of each operation step, to the voltage level of the voltage control signal.

In GB-A-2.062.296 there is disclosed a machine process controller which compares the power drawn by the machine with a predetermined limit level of power and which alters the machine operation after a delay period when the power consumption has continuously exceeded the limit value. The process controller includes a power sensor adapted to read the power drawn by the machine a computer supplied with the power measurement provided by the power sensor and a display associated with the computer.

The underlying problem of this invention is to provide a machine as specified above, which has such structural and functional features as can result in improved performance characteristics.

This problem is solved by a press as indicated being characterised in that it comprises a power sensor associated with an electric power supply line to said apparatus, and effective to take on a continuous basis a measurement of the power draw by said machine operational members, a computer being continuously supplied said power measurement to output an energy measurement, and a display being supplied said energy measurement to have it displayed during the molding cycle, thereby said parameters can be adjusted to suitable values to minimize the amount of energy delivered to the cycle.

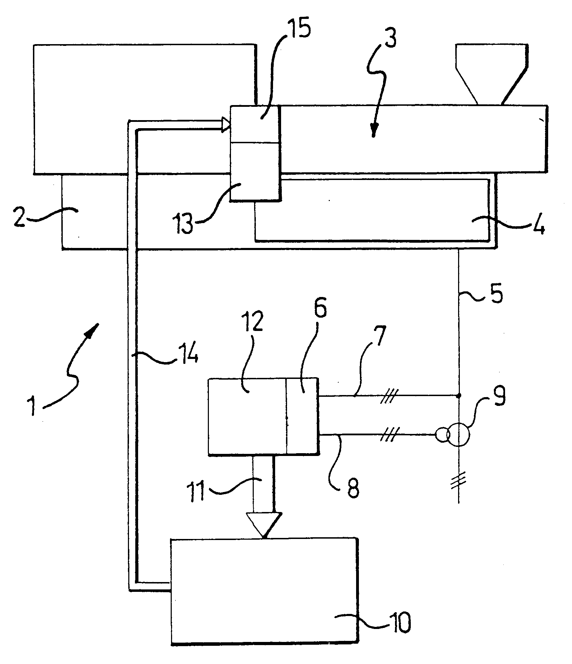

Further features and the advantages of a press according to this invention will become apparent from the following detailed description of an embodiment thereof, given by way of non-limitative example with reference to the accompanying drawing the single figure whereof shows a diagramatic view of the inventive press.

With reference to the drawing single figure, a press 1 for injection molding plastics materials comprises a frame structure 2 accommodating a plurality of machine operational members which are generally shown at 3 and known per se.

Such machine operational members include an auger (extruder), resistance heaters, mold-holding trays, and so forth.

The machine operational members 3 are activated by an electric control apparatus 4 to carry out the molding cycle steps in conformity with pre-settable parameters. The apparatus 4 has a three-phase line 5 for connection to power mains.

The press 1 incorporates a power sensor 6, which is associated with the line 5 to measure the power draw from the operational members 3.

Specifically, the power sensor 6 is effective to sense, through a line 7, voltages on the line 5, and through a line 8 connected to the line 5 via transformers 9, currents on the line 5, to thereby output a power measurement.

The press 1 also includes a computer 10 which is supplied, through a line 11, a power measurement output by the sensor 6. A suitable interface 12 is operative to make the measurement from the computer 10 electronically compatible with the computer 10.

The computer 10, on being supplied the power measurement, will calculate the energy being drawn by the machine operational members 3 versus time and output a measurement thereof.

The press 1 further includes a display 13 which is supplied the energy measurement over a line 14 to display it on its video screen 15.

As the press cycle steps are being carried out, the machine operational members 3 will use up, in accordance with the molding parameter settings, an amount of energy whose measurement is displayed continuously on the display screen 15. Based on readings of such measurements, the molding parameters can be adjusted such that, the desired optimum quality level being achieved for the moldings, the energy consumption during the molding cycle can be minimized.

Thus, the press of this invention affords the advantage of improved performance from the energy consumption standpoint.

It stands to reason that a skilled person in the art may introduce a number of modifications and changes thereto in order to meet specific contingent demands, which modifications and changes are all understood to be encompassed by the invention scope as set forth in the appended claim.

## Claims

1. A press (1) for injection molding plastics materials, comprising machine operational members (3) to be operated by an electric control apparatus (4) to carry out the steps of the molding cycle in conformity with respective adjustable parameters, characterized in that it comprises a power sensor (6) associated with an electric power supply line (5) to said apparatus (4), and effective to take on a continuous basis a measurement of the power draw by said machine operational members (3), a computer (10) being continuously supplied said power measurement to output an energy measurement, and a display (13) being supplied said energy measurement to have it displayed during the molding cycle, thereby said parameters can be adjusted to suitable values to minimize the amount of energy delivered to the cycle.

## Patentansprüche

1. Presse (1) zum Spritzen von Kunststoffen, wobei die Presse Maschinenbetätigungselemente (3) besitzt, die von einer elektrischen Steuereinrichtung (4) im Betrieb gesetzt werden, um die Schritte des Preßvorgangs in Übereinstimmung mit entsprechend einstellbaren Parametern auszuführen, dadurch gekennzeichnet, daß die Presse einen Leistungsfühler (6), der einer Stromversorgungsleitung (5) zur Einrichtung (4) zugeordnet ist, und dazu dient, um eine fortlaufende Messung jener Leistung durchzuführen, die von den Maschinenbetätigunselementen (3) aufgenommen wird, einen Rechner (10), der fortlaufend mit den Leistungsmeßdaten gespeist wird, um Energiemeßdaten abzugeben, sowie eine Anzeige (13) enthält, die mit den Energiemeßdaten angespeist wird, um sie während des Preßvorganges anzuzeigen, wodurch die Parameter auf geeignete Werte eingestellt werden können, um jene Energiemenge zu minimieren, die dem Vorgang zugeführt wird.

## Revendications

1. Presse (1) pour le moulage par injection de matières plastiques, comprenant des organes opérationnels de machine (3) devant être actionnés par un appareil de commande électrique (4) afin d'exécuter les étapes du cycle de moulage en conformité avec des paramètres réglables respectifs, caractérisé en ce qu'elle comprend un détecteur de puissance (6) associé à une ligne d'alimentation électrique (5) de l'appareil (4), et servant à prendre, sur une base continue, une mesure de la puissance absorbée par les organes opérationnels de machine (3), un ordinateur (10) qui reçoit en permanence ladite mesure de puissance et délivre une mesure d'énergie, et un dispositif d'affichage (13) qui reçoit la mesure d'énergie et l'affiche au cours du cycle de moulage, les paramètres pouvant ainsi être réglés à des valeurs appropriées afin de réduire au minimum la quantité d'énergie délivrée au cours du cycle.
